# EUROPÄISCHE PATENTSCHRIFT

(11) **EP 0 357 917 B1**
(45) Veröffentlichungstag und Bekanntmachung des Hinweises auf die Patenterteilung: **21.04.1993**
(21) Anmeldenummer: 89113187.2
(22) Anmeldetag: 19.07.1989
(51) Int. Cl.: B01D 46/24, B01D 46/42, G21F 9/02

(54) **Schutzfilter**
Protective filter
Filtre protecteur

(30) Priorität: 02.08.1988 DE 3826246
(43) Veröffentlichungstag der Anmeldung: 14.03.1990
(73) Patentinhaber: Kessler & Luch GmbH, D-35394 Giessen 1 (DE)
(72) Erfinder: Schmidt, Uwe, Dr. Ing., D-3554 Lohra-Weipoltshausen (DE); Detzer, Rüdiger, Dr. Dipl.-Ing., D-6305 Alten-Buseck (DE)

(56) Entgegenhaltungen:
- WO-A-82/01665
- DE-A- 2 118 777
- US-A- 4 006 000
- US-E- 31 966

## Beschreibung

Die Erfindung betrifft ein Schutzfilter zum Abscheiden gefährlicher oder toxischer Stäube, Nebel, Dämpfe und Gase mit einem von einer Mittelplatte in einen Roh- und einen Reinluftraum geteilten Gehäuse, in dem mindestens eine, von der Mittelplatte rechtwinklig zu ihrer Achse etwa in deren Mitte umgriffenen Filterpatrone mit mindestens einer Filterschicht vorgesehen ist, und an dem ein Roh- und ein Reinluftstutzen angeordnet sind, wobei die Filterpatrone/-n aus zwei Teilen derart gebildet ist, daß zunächst die Filterschicht der ersten Patronenhälfte von außen nach innen, und daß nach Überströmen im Inneren der Filterpatrone die Filterschicht der zweiten Patronenhälfte von innen nach außen durchströmt wird.

Zur Abscheidung schädlicher oder toxischer Luftverunreinigungen, die in Form von Partikeln (Stäuben, Rauche, Nebel) oder molekular verteilt (Dämpfe, Gase) vorliegen, werden Schwebstoffilter zur Abscheidung der partikelförmigen Luftverunreinigungen und Sorptionsfilter zur Abscheidung der molekular verteilten kombiniert. Diese bekannte Technik führt auf der einen Seite zu Raumfiltern, bei denen die Schutzschicht eines Sorptionsmaterials (im allg. Aktivkohle) mit einem Schwebstoffiltereinsatz (im allg. Faserfilter) in einem Gehäuse untergebracht sind, wobei das Gehäuse einen Zu- und einen Abluftstutzen aufweist und durch die Filterschicht selbst in einen Roh- und in einen Reinluftraum unterteilt ist. Die Handhabung derartiger Raumfilter, die sich zur Abscheidung nahezu aller bekannten schädlichen oder toxischen Luftverunreinigungen eignen, ist jedoch nicht einfach; es wurde schon versucht, diese Raumfilter durch Filtereinheiten mit Filterpatronen zu ersetzen, weil durch eine Anzahl gleichartiger Filterpatronen in einer Filtereinheit die Filtereinheit den Bedürfnissen besser anpaßbar ist. Der Aufbau dieser Patronen ist dabei so, daß eine zylindrische Sorptionsfilterschicht zwischen zwei Stützzylindern angeordnet war, und daß der äußere Stützzylinder von einem Faservlies zur Abscheidung partikelförmiger Luftverunreinigungen umgeben wurde. Die einseitig verschlossene Patrone wurde mit ihrem offenen Ende, an dem sich ein entsprechender Einlaßstutzen befand, in ein gelochtes Blech eingesetzt, das die Unterteilung des Filtergehäuses in den Roh- und den Reinluftraum bewirkte. Dieser Weg wurde jedoch verlassen, als sich zeigte, daß diese Anordnung die gewünschten technischen Anforderungen nicht erfüllen konnte.

Zwischenzeitlich hat sich gezeigt, daß die Anordnung eines Schwebstoffilters vor einem Sorptionsfilter problematisch sein kann, und daß eine einzelne Sorptionsfilterschicht ebenfalls Fragen aufwirft, ob nicht durch einen Übergang von Dampf zu Partikel und zurück zu Dampf die Schutzwirkung eingeschränkt ist. Aus diesem Grunde hat sich (besonders bei der Abscheidung organischer Jodverbindungen im Bereich der Kerntechnik) durchgesetzt, daß dem Sorptionsfilter ein Schwebstoffilter vor- und ein weiteres nachgeschaltet ist.

In der Reinigungstechnik für Gase sind Filtereinheiten bekannt, bei denen in einem Gehäuse röhren- oder patronenförmige Filterelemente angeordnet sind, deren Gasaustritt in eine durch eine Trennwand im Gehäuse abgeteilte Austrittskammer münden (z.B. US-Re. 31,966); weiter ist aus der DE-OS 21 18 777 eine Filtereinheit für Flüssigkeiten bekannt, bei der in einem Filterkessel zur Ausfilterung von Bodensätzen von Flüssigkeiten mit einem Zuleitungs- und einem Ableitungsstutzen eine aus zwei Einzelpatronen zusammengesetzte Filterpatrone angeordnet ist, wobei beide Patronenteile, die jeweils eine gewellte Schwebstoffilterschicht und eine von einem Granulat von Ton oder Ton-Kohleteilchen gebildete Sorptionsmittelschicht enthalten, gleichsinnnig durchströmt werden, daher bedarf die Filterpatrone in dieser Anordnung auch keiner Mittenabdichtung. Das Gehäuse, in dem die Filterpatrone angeordnet ist, weist ferner einen den gesamten Querschnitt überdeckenden Deckel auf, durch den die Filterpatronen entnommen werden kann. Die Abführung der gereinigten Flüssigkeit erfolgt über ein beide Filterpatronen verbindendes zentrales Ableitungsrohr, das auch die Funktion eines Befestigungsmittels für die Filterpatrone übernimmt und dazu gelocht ist. Zur Befestigung wird auf das zentrale Ableitungsrohr eine Befestigungsplatte aufgeschraubt, unter der eine Filzdichtung vorgesehen ist, wobei die Befestigungsplatte einen umgebördelten Rand aufweist, zum sicheren Halten der Filterpatrone. Zur Reinigung der Ansaugluft von Verbrennungskraftmaschinen ist weiter bekannt, röhren- oder patronenförmigen Filterelemente aus zwei Patronenteilen zusammenzusetzen und die Filterkammer so zu unterteilen, daß der eine Patronenteil von außen nach innen durchströmt wird, und die andere von innen nach außen, wobei der Innenraum der beiden miteinander verbundenen Patronenteile den dafür notwendigen Überströmraum bildet (z.B. US-PS 4 006 000); bei dieser Art des Filters ist zum Filterwechsel ebenfalls ein Öffnen des gesamten Gehäuses notwendig, wobei der abzunehmende Gehäuseteil einen Anschlußstutzen aufweist, der entweder flexibel ausgebildet ist, oder der vor dem Öffnen abgenommen werden muß.

Zum Abscheiden fester Partikel (Schwebstoffe, Staub), in der Hauptsache für Anwendungen, bei denen erhöhte Sicherheits-Ansprüche zu erfüllen sind, wie z.B. in der pharmazeutischen und der organischchemischen Industrie sowie in der Nuclearindustrie ist schließlich aus der WO 82/01665 eine Vorrichtung bekannt, die ein Gehäuse mit einer Mittelplatte aufweist, die das Gehäuse in einen Roh- und einen Reinluftraum unterteilt und in die eine Filterpatrone eingesetzt ist, wobei der Innenraum der Filterpatrone als Überströmraum dient, wobei das Gehäuse einen Rohluft- und einen Reinluftstutzen zum Anschließen an entsprechende Lüftungsleitungen aufweist. Die Filterpatrone selbst ist von einer ersten und einer zweiten Patronenhälfte gebildet, die derart miteinander verbunden sind, daß die Luft, die die Filterschicht der ersten Patronenhälfte durchströmt, im Innenraum der Filterpatrone überströmt und danach durch die Filterschicht der zweiten Patronenhälfte strömt. Obwohl Hinweise auf einfache Demontage, einfache Auswechselbarkeit des Filtermediums und zum Erkennen und Befestigen von Filter-Fehlern im Dokument Erwähnung finden, wird auf die konstruktive Lösung, die dieses Austauschen ermöglicht, nicht eingegangen.

Hier setzt die Erfindung ein, der die Aufgabe zugrundeliegt, Schutzfilter mit Filterpatronen der genannten Gattung so weiterzubilden, daß sie sicher einsetzbar den Einsatzbedingungen anpaßbar und wirtschaftlich herstellbar sind.

Diese Aufgabe wird durch das Kennzeichen des Hauptanspruchs gelöst; weitere Ausgestaltungen und bevorzugte Ausführungsformen beschreiben die Unteransprüche.

Bei der vorgeschlagenen Anordnung werden die Gehäuse der Schutzfilter mit mittig unterteilten Filterpatronen versehen, die von der das Gehäuse in einen Roh- und einen Reinluftraum unterteilenden Mittelplatte umgriffen und gehalten sind. Es können so Filter-Patronen eingesetzt werden, die aus zwei gleichen Patronenhälften gebildet sind, wobei sich die Gleichheit auf die geometrischen Abmessungen bezieht, sie verbietet nicht, daß unterschiedliche Sorptionsmaterialien und unterschiedliche Schwebstoffilterschichten verwendet werden. Diese in ihren äußeren Abmessungen gleichen Patronenhälften werden mit einem Mitteleinsatz miteinander verbunden, wobei der Mitteleinsatz auch die Dichtungsaufgabe löst. Die ringförmigen Verschlußringe der Patronenzylinder sind auf den offenen, dem Mitteleinsatz zugewandten Seiten gegenüber dem Mitteleinsatz ebenso abgedichtet, wie der Mitteleinsatz gegenüber der Mittelplatte, wozu der Mitteleinsatz als Flansch seitlich herausgeführt und mit einer Dichtung versehen gegen die Mittelplatte gedrückt ist. Die Art der verwendeten Dichtung -im allgemeinen Rundschnurdichtungen- ist dabei unerheblich. Es versteht sich von selbst, daß der Mitteleinsatz selbst auch als Kunststoff-Spritzgußteil ausgeführt auf den beiden, den Verschlußringen zugewandten Seiten ringförmige Dichtprofile aufweisen kann. Vorteilhafterweise wird der Querschnitt dieser Ringprofile dreieckförmig mit nach außen weisender Spitze ausgeführt, da so ein gewünschter Anpreßdruck bei in Grenzen gehaltenen Kräfte erzeugt werden kann. Da bei der geschilderten Ausführungsform die beiden, dem Mitteleinsatz abgewandten Patronenenden mit Deckeln verschlossen sein können, sind weitere Abdichtungen der Filterpatronen gegenüber dem Gehäuse nicht notwendig.

Der Filterwechsel wird durch entsprechende Wechselöffnungen in der z.B. als Boden dienenden Deckplatte des Gehäuses durchgeführt. Dabei versteht es sich von selbst, daß die aus den beiden Patronenhälften gebildete Filterpatrone von entsprechenden Haltemitteln auf der Innenseite des Verschlußdeckels in den Sitz, der ihre Abdichtung gegenüber der Mittelplatte gewährleistet, eingedrückt wird.

Um die Filterpatronen beim Einsetzen führen zu können. ist es vorteilhaft, für jede Filterpatronen -bzw. für jeweils zwei eine Filterpatrone bildende Patronenhälften- ein Führungselement vorzusehen, durch das diese Patronen beim Einsetzen geführt und nach dem Einsetzen lagegesichert sind. Eine Möglichkeit für ein derartiges Führungslement ist eine Zentrierwelle, die koaxial durch das Innere der Filter geführt ist, und auf die sich die Filterpatrone abstützen kann. Dazu sind zumindest die beiden Deckplatten der einander abgewandten Enden der Filterpatronen mit einer dem Wellendurchmesser entsprechenden Öffnung versehen, die auch vorteilhaft als Gleithülse mit geringem Spiel ausgebildet werden kann. Da die Bewegung der Patrone lediglich beim Einsetzen kritisch ist, ist es ohne weiteres möglich, in der Gleithülse eine Ringdichtung vorzusehen, die gegen die Außenräume abdichtet. Alternativ dazu können selbstverständlich auch die Deckplatten der Filterpatrone gegenüber der Deckplatte des Filtergehäuses und dem Verschlußdeckel der Wechselöffnung mit Rundschnur- oder Profildichtungen abgedichtet sein. Der Mitteleinsatz kann ebenfalls zur Verbesserung der Führung herangezogen werden, wobei der Mitteleinsatz über entsprechende Verbindungen mit einer zentralen Gleithülse versehen ist, wobei die Verbindungsmittel als Hülsenträger Raum lassen, um das Überströmen der Luft von einer Hälfte der Filterpatronen zur anderen zu ermöglichen. Eine andere Möglichkeit der Führung der Patrone ist ein eingesetztes Zentrierkreuz, der mit den Innenwänden der Patronenzylinder zusammenwirkt, besonders mit den Verschlußringen, die die Filterpatronen endständig bzw. die Patronenhälfte beidseits verschließen. Dieses Zentrierkreuz kann ein einfaches Stranggußprofil oder ein einfaches Spritzgußteil aus Leichtmetall oder Kunststoff sein. Gleiches gilt auch für den Mitteleinsatz, so daß die Wirtschaftlichkeit der Patronenherstellung sichergestellt werden kann. Eine weitere Möglichkeit der Herstellung des Zentrierkreuzes ist es, gekantete Blechstreifen sternförmig zusammen zu schweißen, wobei vorzugsweise zwei um 90° gekantete Profilstreifen sternförmig miteinander verschweißt werden. Auch das Aufschweißen von zwei um 60° gekanteten Winkeln auf einen durchgehenden Blechstreifen führt zu einem Zentrierkreuz, wobei es sich von selbst versteht, daß das Zentrierkreuz einen Querschnitt aufweist, der dem Querschnitt der Filterpatrone angepaßt ist. Zentrierwelle und Zentrierkreuz sind dabei mit der Deckplatte des Filtergehäuses fest verbunden, wobei als Deckplatte diejenige Platte des Filtergehäuses angesehen wird, die der mit den Wechselöffnungen versehenen Platte gegenüberliegt.

Zur Abdichtung des Mitteleinsatzes gegenüber der Mittelplatte hat diese in einer vorteilhaften Weiterbildung einen leicht nach innen geneigten Schrägkragen, so daß die am äußeren Umfang des Mitteleinsatzes angeordnete (im allg. Rundschnur-)Dichtung in die Schräge hineingedrückt und so eine sichere Abdichtung erzwungen wird.

Da sowohl die Schwebstoff- als auch die Sorptionsfilterschichten durch Einlagerung von abgeschiedenen Stäuben und Schwebstoffen bzw. durch abgeschiedene Dämpfe und Gase im Laufe der Betriebszeit verbraucht werden, ist die Wechselmöglichkeit für die Filterpatronen für einen wirtschaftlichen Betrieb bedeutsam. Die Möglichkeit, die Filterpatronen über eine Entnahme- oder Wechselöffnung zu entnehmen und durch neue Patronen zu ersetzten, ist für die Patronen, die nicht an der Mittelplatte gehalten sind, dann in einfacher Weise möglich, wenn der Verschlußdeckel mit einem Halteelement versehen ist, das die Patroneneinheit anpreßt. Dazu kann der Verschlußdeckel mit der Unterseite der Patronen (u.U. formschlüssig) zusammenwirkende Halteelemente aufweisen, wobei entweder der Patronendeckel selbst federnd angepreßt wird, oder das Halteelement als Federelement ausgebildet ist. Ersteres bietet sich an, wenn als Drehverschluß für den Verschlußdeckel ein federnder Bajonettverschluß genommen wird. Wird der Verschlußdeckel ohne Zwischenschaltung von Federn mit dem Gehäuseboden verbunden, können elastische Halteelemente, wie auf Federn gelagerte Andrückplatten oder elastische Haltekissen o.dgl. diese Funktion übernehmen.

Für das Auswechseln der Patronen ist es vorteilhaft, wenn beim Einführen der neuen Filterpatrone diese in einem (vorläufigen) Sitz gehalten wird, bis der Verschlußdeckel aufgesetzt ist. Dieses vorläufige Halten kann durch federnde Rastnasen bewirkt werden, die sich im Bereich eines Kragens an der Wechselöffnung befinden, und die von außen die Filterpatrone halten. Diese federnden Rastnasen können aber auch bei mit Zentriermitteln zentrierten Filterpatronen am Zentrierkreuz oder an der Zentrierwelle vorgesehen sein, so daß sie von innen auf die Filterpatrone wirken. Beim Einsetzen wird dann zunächst der vorläufige Sitz gesucht, und es kann dann ohne Gefahr, daß die Filterpatrone wieder verrutscht (oder gar heraus rutscht) der Verschlußdeckel aufgesetzt und einwandfrei angezogen werden.

Ist beim Wechseln der Filterpatrone Kontamination des zur Auswechslung einzusetzenden Personals zu befürchten, kann der Verschlußdeckel durch einen in die gleichen Haltemittel eingesetzten Behälter ersetzt werden, in den die Filterpatrone hinein fällt. Vorteilhaft ist es, den Auffangbehälter als Wartungssack auszubilden, und anstelle des Verschlußdeckels einen Wechseleinsatz aufzusetzen, auf den der Filterwartungssack in der üblichen Wartungssacktechnik) mit mindestens einem Spannring aufgeklemmt wird. Durch diesen Wartungssack lassen sich dann die Rastnasen manuell lösen und die freigegebene Filterpatrone kann in den Wartungssack von Hand gebremst gleiten. Der Wartungssack läßt sich nach dem Einführen der Filterpatrone abschweißen, so daß diese auch nach ihrer Entnahme ständig dicht verschlossen ist. Es versteht sich von selbst, daß der Wartungseinsatz ständig am Filtergehäuse verbleiben kann, der Verschlußdeckel ist dann so auszubilden, daß er den Wartungssack übergreift. In diesem Falle spielt die Dichtheit des Verschlußdeckels keine wesentliche Rolle mehr, da die Wartungsöffnung ständig durch einen Wartungssack verschlossen ist, der zusammengerollt in dem rohrförmigen Ansatz der Wartungseinheit Platz findet. Beim Wechsel der Filterpatronen wird der Wartungssack entfaltet, die Patronen gelöst und in den Wartungssack überführt. Nach dem Abschweißen des Wartungssackes und Abtrennen des die Patrone enthaltenden Teils wird ein neuer Wartungssack aufgesetzt, wozu die Wechseleinheit vorteilhaft mit zwei Rillen versehen ist. Der als Rest an der Wechseleinheit verbliebene, abgeschweißte Teil des Wartungssackes kann in den neuen Wartungssack überführt werden, der vorher auf der Wechseleinheit dicht verspannt wurde. Durch diese Technik ist es möglich, ständig unter Abschluß zu arbeiten, so daß die Kontaminationsgefahr der Umgebung auf ein Minimum gebracht wird. Um eine Kontamination des Reinluftraumes beim Wechsel der Filterpatrone zu vermeiden, ist es darüber hinaus vorteilhaft, wenn der Filterwechsel durch den Rohluftraum erfolgt, so daß der Reinluftraum des Filtergehäuses keine kontaminierende Belastung erfährt.

Zur Verbesserung der Einsatzbreite des vorbeschriebenen Schutzfilters sind die zwei Patronenhälften der Filterpatrone gebildet von je einer Einzelpatrone, vorzugsweise mit unterschiedlichen Sorptionsfilter- und/oder Schwebstoffilterschichten versehen. Durch die unterschiedlichen Sorptionsfiltermaterialien lassen sich Anpassungen an abzuscheidende Gase oder Dämpfe durchführen. Die Partikelabscheidung läßt sich dementsprechend einstellen, wobei im allg. das rohluftseitig angeordnete Schwebstoffilter eine den gesamten Partikelbereich gut überdeckende Abscheidewirksamkeit hat. Das nachgeschaltete Schwebstoffilter braucht -von Sonderfällen abgesehen- lediglich Abrieb des Sorptionsmaterials zurück zu halten; die Anforderungen an sein Abscheidevermögen müssen daher nicht die gleichen sein, wie an das eintrittsseitige Schwebstofffilter. Dadurch kann der Luftwiderstand geringer gehalten werden, so daß sich im Betrieb mit dem vorgesehenen Luftstrom eine Reduzierung des sich an der Filterpatrone einstellenden Druckdifferenz ergibt. Darüber hinaus ist es in Sonderfällen möglich, daß zwischen den beiden Sorptionsfilterschichten einer Filterpatrone ein weiteres Schwebstoffilter angeordnet wird. Dies ist möglich, da der Innenzylinder mit einer Schwebstoffilterschicht belegt werden kann.

Das Wesen der Erfindung wird beispielhaft anhand der Fig. 1 bis 6 näher geschildert. Dabei zeigen
- Fig. 1: eine Filtereinheit mit 12 Filterpatronen (Teilschnitt, schematisch)
- Fig. 2: einen Querschnitt durch eine Filtereinheit mit einer Filterpatrone,
- Fig. 3: Einzelheit Verschlußdeckel,
- Fig. 4: Einzelheit Wartungssack,
- Fig. 5: Längsschnitt durch eine aus zwei Einzelpatronen zusammengesetzte Filterpatrone geführt von Zentrierwelle,
- Fig. 6: Längsschnitt einer aus zwei Einzelpatronen zusammengesetzten Filterpatrone geführt von Zentrierkreuz mit dazu gehörendem (halben) Querschnitt.

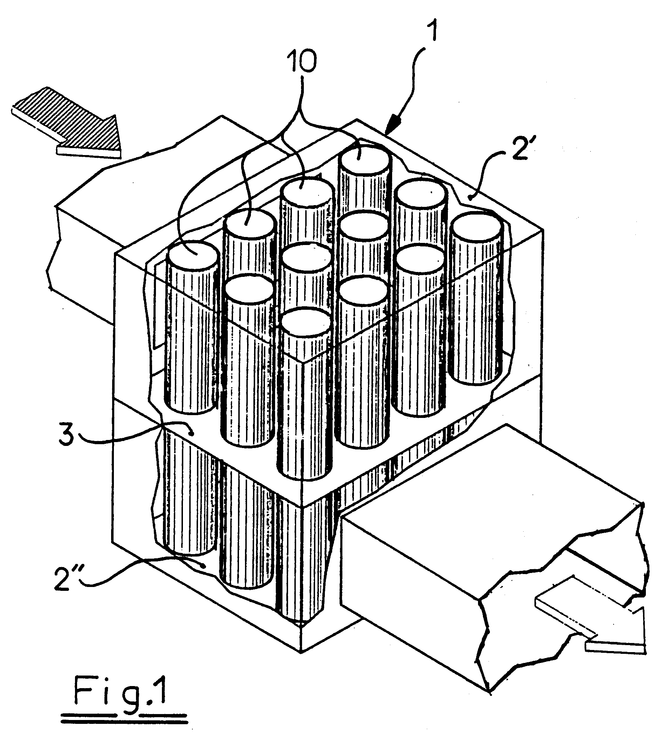

Die in Fig. 1 dargestellte Filtereinheit besteht aus einem Filtergehäuse 1 mit einer Deckplatte 2' und einer Bodenplatte 2''. Zwischen diesen beiden Deckplatten 2' und 2'' befindet sich eine Mittelplatte 3, die die 12 eingesetzten Filterpatronen 10 etwa mittig umgreifen. Das Filtergehäuse 1 besitzt einen (nicht näher bezeichneten) Lufteintrittsstutzen, durch den die zu reinigende Luft in den Rohluft eintritt. Die gereinigte Luft sammelt sich nach Durchströmen der Filterpatronen im Reinluftraum und strömt durch den (nicht näher bezeichneten) Reinluftstutzen ab. Es versteht sich von selbst, daß Rohluft- und Reinluftstutzen an geeignete Lüftungskanäle angeschlossen sein können, daß aber auch die Rohluft z.B. frei angesaugt oder die Reinluft z.B. frei augeblasen werden kann.

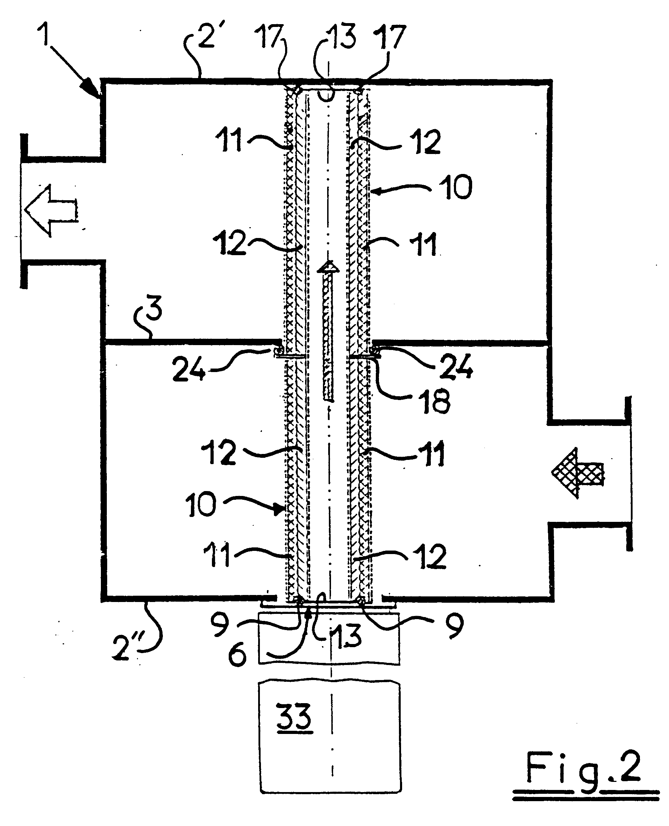

In der Fig. 2 sind die Verhältnisse mit einer Filterpatrone 10 nochmals schematisch dargestellt. Das Filtergehäuse 1 wird wiederum durch die Mittelplatte 3 in einen Rohluftraum und einen Reinluftraum unterteilt, wobei die Deckplatten 2' und 2'' zusammen mit den (nicht näher bezeichneten) Seitenwänden das Filtergehäuse begrenzen. Die in das Filtergehäuse eingesetzte Filterpatrone 10 - es versteht sich von selbst, daß die weiteren Patronen in gleicher Weise eingesetzt sind, so daß die Darstellung auf eine Patrone beschränkt wurde - legt sich mit ihrer oberen Deckplatte 13 gegen die Deckplatte 2' des Filtergehäuses 1, wobei die zwischengelegten Dichtungen 17 wegen der geschlossenen Verschlußplatte 13 lediglich als Puffer arbeitet und in diesem Falle keine Dichtungsfuktion haben. Die Filterpatrone besteht aus einer ersten Schwebstoffilterschicht 11 und einer dieser Filterschicht nachgeschalteten Sorptionsfilterschicht 12. Diese Schichten sind in der Mitte unterteilt, wobei die Unterteilung als radial nach außen überstehender Flansch 18 ausgebildet ist. Mit diesem Flansch 18 wird die Mitte der Filterpatrone gegen die Mittelplatte 3 gedrückt und mittels der zwischengelegten Dichtungen 24 dort abgedichtet. Der untere Teil der Patrone ist in gleicher Weise aufgebaut und besteht aus der Schwebstoffilterschicht 11 und der Sorptionsfilterschicht 12. Das untere Ende ist - wie auch das obere Ende - mit der Verschlußplatte 13 verschlossen, die von der lösbaren Verschlußplatte 6 des Filtergehäuses getragen wird. Die eingefügte Dichtung 9 übernimmt - wie zuvor im Zusammenhang mit der Dichtung 17 dargestellt - keine Dichtungs- sondern eine Pufferfunktion, da auch auf dieser Seite der Filterpatrone der Verschlußdeckel 13 durchgehend verschlossen ist. Die Rohluft tritt entsprechend den Pfeilen in die Rohluftkammer des Filtergehäuses ein, die auf der Seite angeordnet ist, deren Deckplatte 2'' mit dem Verschlußdeckel 6 versehen die Entnahme der Filterpatronen erlaubt. Nach Durchströmen der Filterpatrone sammelt sich die gereinigte Luft in der (oberen) Reinluftkammer und strömt über den Reinluftstutzen ab. Die zwischen den Mittelflansch 18 und der Mittelplatte 3 angeordnete (Rundschnur) Dichtung 24 wird allein durch das Zusammenwirken von Patrone und öffenbaren Verschlußdeckel 6 angedrückt, wozu die Härten der entständigen Dichtungsringe 9 und 17 auf die Härte der mittleren Dichtung 24 abgestimmt sein müssen.

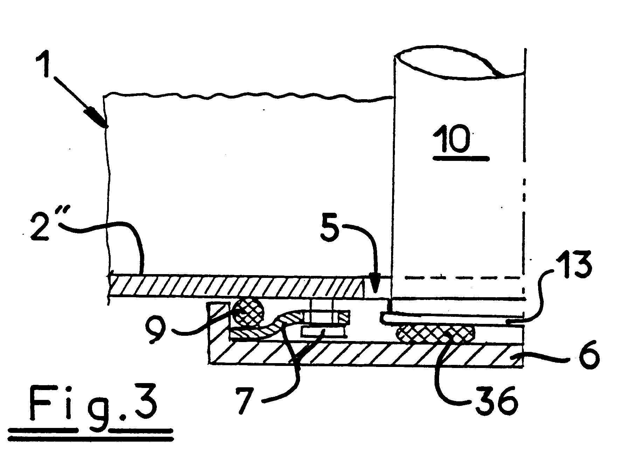

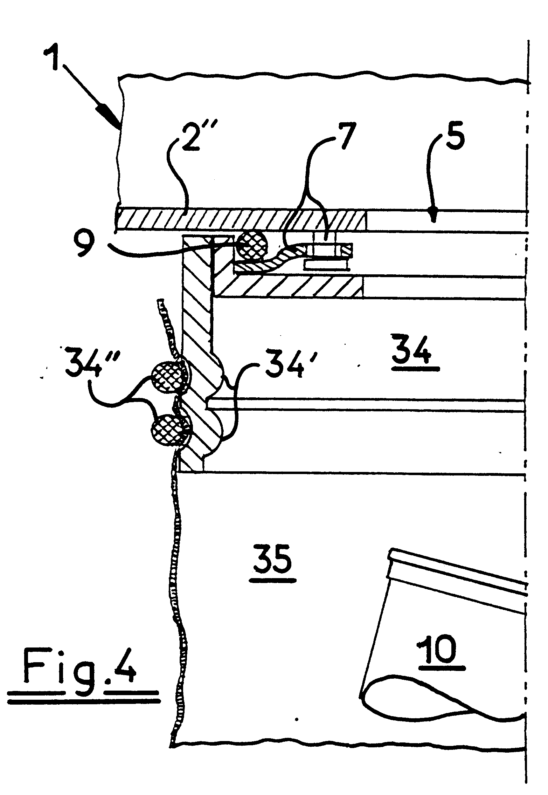

Die Fig. 3 zeigt eine Einzelheit der Deckplatte 2˝, die mit den Öffnungen 5 zum Auswechseln der Filterpatrone 10 versehen ist. Die Wechselöffnung 5 wird mit dem Verschlußdeckel 6 verschlossen, der mit entsprechenden Federn versehen ist, die mit Haltestiften einen bajonettartigen Drehverschluß 7 bilden. Eine umlaufende Dichtung 9 dichtet den eingesetzten und angezogenen Verschlußdeckel 6 gegenüber der Deckplatte 2˝ ab. Um den gewünschten Druck auf die Filterpatrone 10 ausüben zu können, weist die Deckplatte 6 ein elastisches Kissen 36 auf, das als Ringkissen (wie dargestellt) oder als zentrales Kissen ausgebildet ist und mit dessen Hilfe der für das dichte Anlegen der Mittendichtung 24 (Fig. 2) notwendige Druck erzeugt werden kann. In der Fig. 4 ist die gleiche Situation während des Wechsels der Filterpatrone mit Hilfe der Wartungssackmethode dargestellt. Hier ist der Verschlußdeckel 6 zum Verschließen der Wechselöffnung 5 in der Deckplatte 2˝ durch die Wartungseinheit 34 ersetzt worden, die den gleichen Verschlußmechanismus 7 aufweist, wie die Deckplatte 6 (Fig. 3). Auch hier ist eine eingelegte Dichtung 9 als Dichtelement zwischen der Wartungseinheit 34 und der Deckplatte 2˝ vorgesehen. Die (hier bereits entnommen dargestellte) Filterpatrone 10 ist in den Wartungssack 35 überführt, der in den Rillen 34′ der Wartungseinheit 34 mit den Spannbändern 34˝ gehalten ist. Nach der Überführung der Filterpatrone 10 in den Wartungssack wird dieser oberhalb der Filterpatrone abgeschweißt, so daß ein Wartungssack-Rest an der Wartungseinheit 34 verbleibt und die entnommene Filterpatrone 10 im verschweißt abgetrennten Teil des Wartungssackes abtransportiert werden kann.

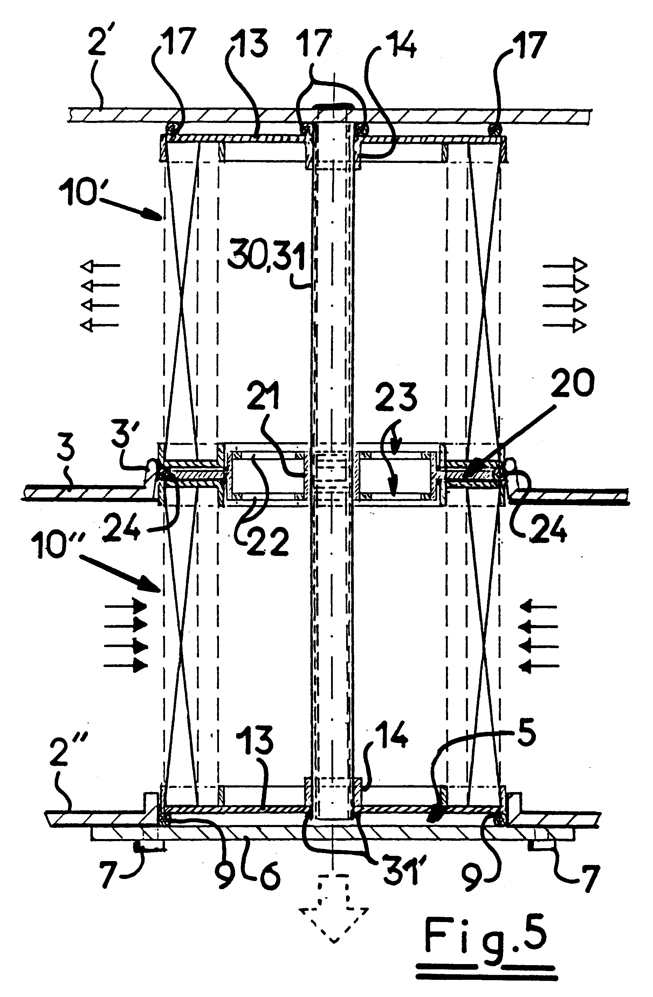

Unter Verwendung zweier gleicher Patronen 10′ und 10˝ läßt sich die Filterpatrone 10 (Fig. 5) ebenfalls herstellen, wenn zwischen den beiden Filterpatronen ein Mitteleinsatz 20 verwendet wird, der den Mittelflansch 18 (Fig. 2) ersetzt und die Trennung der Filterpatronen bewirkt. Der Mitte leinsatz 20 besteht aus dem die Patronen tragenden Teil, dessen äußerer Umfang die Umfangsdichtung 24 aufnimmt, die den Mitteleinsatz 20 gegenüber der Mittelplatte 3 abdichtet. Dazu wird die Mittelplatte 3 zweckmäßigerweise mit einem Schrägkragen 3′ versehen, so daß bei axialer Bewegung der Filterpatrone die Dichtung 24 notwendigerweise in den Dichtsitz gepreßt wird. Wird eine Zentrierung der Einzelpatronen 10′ und 10˝ gewünscht, kann eine zentrale Zentrierwelle 31 eingesetzt werden, die mit der Deckplatte 2′ z.B. durch Schweißung fest verbunden ist, die der mit den Wechselöffnungen 5 versehenen Deckplatte 2˝ gegenüber liegt. Die Führung der Patronen wird durch Durchbrüche in den Deckplatten 13 erreicht, die auch mit Hülsen 14 versehen sein können. Da nun die Deckplatten 13 auf beiden Seiten der Patronen nicht mehr verschlossen sind, werden die Dichtungen 9 und 17 notwendig, die nun auch Dichtfunktion übernehmen müssen. Diese Dichtfunktion setzt voraus, daß über den Verschlußdeckel 6 eine zum Abdichten ausreichende Kraft auf die Filterpatrone 10 ausgeübt wird, um die endständigen Dichtungen 9 und 17 anzupressen. Durch den Schrägkragen 3′ wird der dazu notwendige Weg verfügbar gemacht. Der Mitteleinsatz 20 kann mit einer weiteren Gleithülse 21 zur Verbesserung der Führung der beiden Einzelpatronen 10′ und 10˝ versehen sein, dabei wird die Gleithülse 21 über Gleithülsenträger 22 so mit dem Mitteleinsatz 20 verbunden, daß Überströmöffnungen 23 verbleiben, so daß die durch die eine Einzelpatrone getretene Luft im Patroneninneren in den Bereich der anderen Einzelpatrone überströmen kann. Die Wechselmöglichkeit ist durch den gestrichelt angedeuteten Entnahmepfeil in Achsrichtung der Zentrierung gegeben. An der Zentrierwelle 31 vorgesehene Klemmnasen 31′ helfen beim Einsetzen der Patrone nach dem Patronenwechsel und halten die eingesetzte Filterpatrone in ihrer vorläufigen Lage, bis der Verschlußdeckel 6 aufgesetzt und im Drehverschluß 7 festgezogen wird.

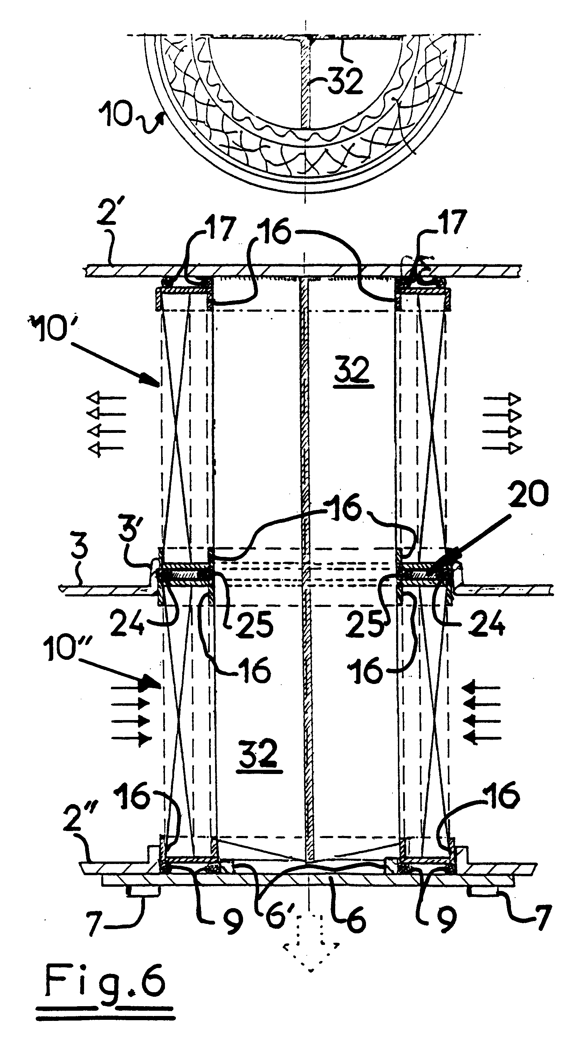

Die Fig. 6 zeigt die gleichen Verhältnisse, lediglich ist hier die zentrale Welle 31 zum Zentrieren ersetzt worden durch kreuzförmige Zentriermittel 32, die aus zwei um 90^{o} abgekanteten, gleichschenkeligen Blechstreifen gebildet ist.

Durch dieses Zentrierkreuz 32 werden beide Einzelpatronen 10′ und 10˝ über nahezu ihre gesamte Länge geführt, so daß der Mitteleinsatz auf den durch die Einzelpatronen vorgegebenen Ringbereich beschränkt werden kann. Zur symmetrischen Abstützung wurde der Mitteleinsatz 20 noch mit einem inneren Dichtungsring 25 versehen, der im wesentlichen tragende Funktion hat. Um die zylinderringförmige Patrone auch von der Seite des Verschlußdeckels 6 zentrieren und führen zu können, kann ein umlaufender Kragen 6′ vorgegeben sein, der gleichzeitig als Stütze für einen zweiten, inneren Dichtungsring 9 dient, so daß die Abstützung der Patronen gegenüber dem Verschlußdeckel 6 wie auch gegenüber der gegenüberliegenden Deckplatte 2′ symmetrisch erfolgt.

## Patentansprüche

1. Schutzfilter zum Abscheiden gefährlicher oder toxischer Stäube, Nebel, Dämpfe und Gase mit einem von einer Mittelplatte (3) in einen Roh- und einen Reinluftraum geteilten Gehäuse (1), in dem mindestens eine, von der Mittelplatte rechtwinklig zu ihrer Achse etwa in deren Mitte umgriffenen Filterpatrone (10) mit mindestens einer Filterschicht vorgesehen ist, und an dem ein Roh- und ein Reinluftstutzen angeordnet sind, wobei die Filterpatrone/-n (10) aus zwei Teilen derart gebildet ist, daß zunächst die Filterschicht des ersten Patronenteils von außen nach innen, und daß nach Überströmen im Inneren der Filterpatrone (10) die Filterschicht des zweiten Patronenteils von innen nach außen durchströmt wird, **dadurch gekennzeichnet,** daß jede Filterpatrone (10) aus zwei gleichen, von einem die Unterteilung (18) der Filterpatrone (10) bildenden Mitteleinsatz (20) getrennten Patronenhälften (10', 10'') mit je einer Schwebstoffilter- und einer Sorptionsmittelschicht (11, 12) gebildet ist, wobei der Mitteleinsatz (20) als Flansch seitlich herausgeführt und mit einer Dichtung (24) versehen gegen die Mittelplatte (3) gedrückt ist, und beide Patronenhälften (10', 10'') mit je einer endständigen Deckplatte (13) verschlossen sind, und daß die erste der beiden Patronenhälften (10', 10'') gegen die Deckplatte (3) des für jede der Filterpatronen (10) mit einer Wechselöffnung (5) versehene Filtergehäuses (1) unter Zwischenfügung entsprechender Dichtungen (17) abgestützt ist, während die zweite der Einzelpatronen (10'') von einem öffenbaren Verschlußdeckel (6) derart gehalten ist, daß beide Filterpatronen (10', 10'') durch die Wechselöffnung (5) austauschbar sind.

2. Schutzfilter nach Anspruch 1, **dadurch gekennzeichnet,** daß beide Patronenhälften (10', 10'') von einem gemeinsamen, mit dem Gehäuse fest verbundenen, zentrisch zu der Wechselöffnung (5) angeordneten Führungselement (30) geführt sind.

3. Schutzfilter nach Anspruch 2, **dadurch gekennzeichnet,** daß das Führungselement (30) als Zentrierwelle (31) ausgebildet ist, wobei die einander abgewandten Enden der die Filterpatrone (10) bildenden Patronenhälften (10', 10'') mit je einer Deckplatte (13) verschlossen sind, die jede eine Gleithülse (14) aufweist, und wobei der Mitteleinsatz (20) eine weitere Gleithülse (21) aufweist und die Gleithülsen (14, 21) die Zentrierwelle (31) mit geringem Spiel umgreifen.

4. Schutzfilter nach Anspruch 3, **dadurch gekennzeichnet,** daß die Gleithülsen (21) des Mitteleinsatzes (20) über einen Überströmöffnungen aufweisenden Gleithülsenträger (22) mit diesem verbunden sind.

5. Schutzfilter nach Anspruch 2, **dadurch gekennzeichnet,** daß das Führungselement (30) als Zentrierkreuz (32) ausgebildet ist, wobei die einander abgewandten Enden der die Filterpatrone (10) bildenden Patronenhälften (10', 10'') mit je einem Verschlußring (16) die Außenkanten das Zentrierkreuz (32) mit geringem Spiel umfassen.

6. Schutzfilter nach Anspruch 5, **dadurch gekennzeichnet,** daß das Zentrierkreuz (32) ein Leichtmetall-Strangguß- oder ein Kunststoff-Spritzgußprofil ist.

7. Schutzfilter nach Anspruch 5, **dadurch gekennzeichnet,** daß das Zentrierkreuz (32) aus gleichschenklig gekanteten Blechprofilen zusammengeschweißt ist.

8. Schutzfilter nach einem der Ansprüche 1 bis 7, **dadurch gekennzeichnet,** daß die Patronendurchführung durch die Mittelplatte (3) als Loch (4) mit umlaufenden Schrägkragen (3') ausgebildet ist, so daß die Dichtung (24) mit der Schrägfläche der Schrägkragens (3') zusammenwirkt.

9. Schutzfilter nach einem der Ansprüche 1 bis 8, **dadurch gekennzeichnet,** daß die Filterpatrone (10) bzw. die aus zwei Einzelpatronen (10', 10'') gebildete Filterpatrone (10) durch federnde Rastnasen am Kragen der Bodenplatte (2'') oder an der Zentrierwelle (31) oder an dem Zentrierkreuz (32) bei der Montage vor dem Andrücken im Sitz gehalten sind.

10. Schutzfilter nach einem der Ansprüche 1 bis 9, **dadurch gekennzeichnet,** daß der Verschlußdeckel (6) mit einem bajonettartigen Drehverschluß am Boden (2'') des Gehäuses (1) befestigt ist, wobei die Verschlußbajonette (7) als Anpressung bewirkende Federelemente ausgebildet sind.

11. Schutzfilter nach einem der Ansprüche 1 bis 10, **dadurch gekennzeichnet,** daß die Innenseite des Verschlußdeckels (6) mit einem die Anpressung bewirkenden elastischen Glied, wie Druckkissen, Feder o.dgl. versehen ist.

12. Schutzfilter nach einem der Ansprüche 1 bis 11, **dadurch gekennzeichnet,** daß auf der Innenseite des die Wechselöffnung (5) verschließenden Verschlußdeckels (6) ein umlaufender Kragen (6') vorgesehen ist, dessen Außendurchmesser geringfügig kleiner ist, als der Innendurchmesser der Verschlußringe (16) der Patronenhälften (10', 10'').

13. Schutzfilter nach einem der Ansprüche 1 bis 12, **dadurch gekennzeichnet,** daß der Verschlußdeckel (6) durch einen Aufnahmebehälter (33), Wartungsack (35) o.dgl. ersetzbar ist, wobei die Filterpatrone (10) bzw. die beiden eine Filterpatrone bildenden Patronenhälften (10', 10'') haltenden Rastnasen vorzugsweise erst nach Ansetzen des Aufnahmebehälters (33), des Wartungssackes (35) o.dgl. lösbar sind.

14. Schutzfilter nach Anspruch 13, **dadurch gekennzeichnet,** daß zum Ansetzen des Wartungssackes (35) ein Wechseleinsatz (34) in den Drehverschluß am Boden (2', 2'') des Gehäuses (1) ansetzbar ist, wobei der Wechseleinsatz (34) mit mindestens einer Rille (34') zum Festklemmen des Wartungssackes (35) mittels eines Spannringes (34'') versehen ist.

15. Schutzfilter nach einem der Ansprüche 1 bis 14, **dadurch gekennzeichnet,** daß die zwei Patronenhälften der Filterpatrone (10) gebildet sind von je einer Einzelpatrone (10'; 10''), vorzugsweise mit unterschiedlichen Sorptionsfilter- und/oder Schwebstoffilterschichten (11, 12) versehen.

16. Schutzfilter nach einem der Ansprüche 1 bis 15, **dadurch gekennzeichnet,** daß im Bereich des inneren Zylinders mit mindestens einer der Patronenhälften bwz. Einzelpatronen (10', 10'') der Filterpatrone (10) eine weitere Schwebstoffilterschicht angeordnet ist.

## Claims

1. Protective filter for the separation of dangerous or toxic dusts, mists, vapours and gases, with a housing (1), which is divided by a central plate (3) into a raw air space and a clean air space and in which is provided at least one filter cartridge (10), which is embraced by the central plate at right angles to its axis and in about the middle thereof and has at least one filter layer, and at which a raw air connecting piece and a clean air connecting piece are arranged, wherein the or each filter cartridge (10) is constructed of two parts in such a manner that the filter layer of the first cartridge part is initially flowed through inwardly from the outside and, after overflowing in the interior of the filter cartridge (10), the filter layer of the second cartridge part is flowed through outwardly from the inside, characterised thereby, that each filter cartridge (10) is formed of two like cartridge halves (10', 10"), which are separated by a central insert (20) forming the subdivision (18) of the filter cartridge (10) and each have a suspended substance filter layer (11) and a sorbent material layer (12), wherein the central insert (20) is led out laterally as flange and provided with a seal (24) urged against the central plate (3), and both the cartridge halves (10', 10") are each closed by a respective cover plate (13) at the end, and that the first of the two cartridge halves (10', 10") is supported with the interposition of appropriate seals (17) against the cover plate (13) of the filter housing (1) provided with an exchange opening (5) for each of the filter cartridges (10), whilst the second of the individual cartridges (10") is retained by an openable closure lid (6) in such a manner that both filter cartridges (10', 10") are exchangeable through the exchange opening (5).

2. Protective filter according to claim 1, characterised thereby, that both the cartridge halves (10', 10") are guided by a common guide element (30), which is firmly connected with the housing and arranged centrally relative to the exchange opening (5).

3. Protective filter according to claim 2, characterised thereby, that the guide element (30) is constructed as centring shaft (31), wherein the mutually remote ends of the cartridge halves (10', 10") forming the filter cartridge (10) are each closed by a respective cover plate (13) each displaying a sliding sleeve (14) and wherein the central insert (20) displays a further sliding sleeve (21) and the sliding sleeves (14, 21) embrace the centring shaft (31) with little play.

4. Protective filter according to claim 3, characterised thereby, that the sliding sleeves (21) of the central insert (20) are connected therewith by way of a sliding sleeve carrier (22) displaying overflow openings.

5. Protective filter according to claim 2, characterised thereby, that the guide element (30) is constructed as centring spider (32), wherein the mutually remote ends of the cartridge halves (10', 10") forming the filter cartridge (10) each by a respective closure ring (16) embrace the outer edges of the centring spider (32) with little play.

6. Protective filter according to claim 5, characterised thereby, that the centring spider (32) is an extruded light metal part or an injection-moulded part of synthetic material.

7. Protective filter according to claim 5, characterised thereby, that the centring spider (32) is welded together from equilaterally bent sheet metal profiles.

8. Protective filter according to one of the claims 1 to 7, characterised thereby, that the cartridge feedthrough through the central plate (3) is formed as a hole (4) with an encircling inclined collar (3') so that the seal (24) co-operates with the inclined surface of the inclined collar (3').

9. Protective filter according to one of the claims 1 to 8, characterised thereby, that the filter cartridge (10), or the filter cartridge (10) formed of two individual cartridges (10', 10") is held in the seating by resilient detent lugs at the collar of the base plate (2") or at the centring shaft (31) or at the centring spider (32) before the contact pressure during the assembly.

10. Protective filter according to one of the claims 1 to 9, characterised thereby, that the closure lid (6) is fastened by a rotary bayonet fastener to the base (2") of the housing (1), wherein the fastening bayonets (7) are constructed as spring elements effecting contact pressure.

11. Protective filter according to one of the claims 1 to 10, characterised thereby, that the inward side of the closure lid (6) is provided with an elastic member, such as pressure pad, spring or the like, effecting contact pressure.

12. Protective filter according to one of the claims 1 to 11, characterised thereby, that an encircling collar (6'), the external diameter of which is slightly smaller than the internal diameter of the closure rings (16) of the cartridge halves (10', 10"), is provided on the inward side of the closure lid (6) closing the exchange opening (5).

13. Protective filter according to one of the claims 1 to 12, characterised thereby, that the closure lid (6) is replaceable by a receiving container (33), maintenance sack (35) or the like, wherein the detent lugs retaining the filter cartridge (10) or the two cartridge halves (10', 10") forming a filter cartridge are preferably detachable only after attachment of the receiving container (33), the maintenance sack (35) or the like.

14. Protective filter according to claim 13, characterised thereby, that an exchange insert (34) is attachable into the rotary fastener at the base (2', 2") of the housing (1) for the attachment of the maintenance sack (35), wherein the exchange insert (34) is provided with at least one groove (34') for the firm clamping of the maintenance sack (35) by means of a clamping ring (34").

15. Protective filter according to one of the claims 1 to 14, characterised thereby, that the two cartridge halves of the filter cartridge (10) are each formed by a respective individual cartridge (10', 10"), preferably with different sorption filter layers (12) and/or suspended substances filter layers (1).

16. Protective filter according to one of the claims 1 to 15, characterised thereby, that a further suspended substance filter layer is arranged with at least one of the cartridge halves or individual cartridges (10', 10") of the filter cartridge (10) in the region of the inner cylinder.

## Revendications

1. Filtre de protection pour la séparation de poussières, embruns, vapeurs et gaz dangereux ou toxiques comprenant un boîtier (1) divisé par une plaque médiane (3) en un espace d'air brut et un espace d'air pur dans lequel il est prévu au moins une cartouche filtrante (10) entourée ou saisie par la plaque médiane à angle droit à son axe à peu près à son milieu avec au moins une couche filtrante et sur lequel sont disposés une buse ou tubulure d'air brut et une buse ou tubulure d'air pur, la ou les cartouches filtrantes (10) étant constituées de deux parties de telle sorte que d'abord la couche filtrante de la première partie de cartouche est traversée de l'extérieur vers l'intérieur et que, après le passage à l'intérieur de la cartouche filtrante (10), la couche filtrante de la deuxième partie de cartouche est traversée de l'intérieur vers l'extérieur, caractérisé en ce que chaque cartouche filtrante (10) est constituée de deux moitiés de cartouche identiques (10', 10") séparées par un insert médian (20) réalisant la division (18) de la cartouche filtrante (10) avec, respectivement, une couche filtrante pour matières suspendues en l'air et une couche de moyen à sorption (11, 12), l'insert médian (20) étant sorti latéralement comme rebord et est pressé, pourvu d'un joint d'étanchéité (24), contre la plaque médiane (3), et les deux moitiés de cartouche (10', 10") étant fermées, respectivement, d'une plaque de recouvrement (13) côté extrême, et en ce que la première des deux moitiés de cartouche (10', 10") prend appui contre la plaque de recouvrement (3) du boîtier de filtre (1) pourvu d'une ouverture de remplacement (5) pour chacune des cartouches filtrantes (10) en intercalant des joints d'étanchéité (17) correspondants, tandis que la deuxième des cartouches individuelles (10") est maintenue par un couvercle pouvant être ouvert (6) de telle sorte que les deux cartouches filtrantes (10', 10") peuvent être remplacées par l'ouverture de remplacement (5).

2. Filtre de protection selon la revendication 1, caractérisé en ce que les deux moitiés de cartouche (10', 10") sont guidées par un élément de guidage (30) commun relié solidement au boîtier, disposé centralement à l'ouverture de remplacement (5).

3. Filtre de protection selon la revendication 2, caractérisé en ce que l'élément de guidage (30) est réalisé sous forme d'arbre de centrage (31), les extrémités éloignées l'une de l'autre des moitiés de cartouche (10', 10") formant la cartouche filtrante (10) étant fermées, respectivement, par une plaque de recouvrement (13) dont chacune présente une douille coulissante (14), et dans lequel l'insert médian (20) présente une autre douille coulissante (21) et les douilles coulissantes (14, 21) entourent l'arbre de centrage (31) avec un faible jeu.

4. Filtre de protection selon la revendication 3, caractérisé en ce que les douilles coulissantes (21) de l'insert médian (20) sont reliées à celui-ci par un support de douilles coulissantes (22) présentant des ouvertures de passage.

5. Filtre de protection selon la revendication 2, caractérisé en ce que l'élément de guidage (30) est réalisé sous forme de croix de centrage (32), les extrémités éloignées l'une de l'autre des moitiés de cartouche (10', 10") formant la cartouche filtrante (10) entourant respectivement par, un anneau de fermeture (16) les arêtes externes de la croix de centrage (32) avec un faible jeu.

6. Filtre de protection selon la revendication 5, caractérisé en ce que la croix de centrage (32) est un profilé coulé en métal léger ou moulé par injection.

7. Filtre de protection selon la revendication 5, caractérisé en ce que la croix de centrage (32) est constituée par soudage de tôles profilées pliées à branches égales.

8. Filtre de protection selon l'une des revendications 1 à 7, caractérisé en ce que le passage des cartouches à travers la plaque médiane (3) est réalisé sous forme de trou (4) avec un collet oblique s'étendant tout autour (3') de sorte que le joint d'étanchéité (24) coopère avec la face oblique du collet oblique (3').

9. Filtre de protection selon l'une des revendications 1 à 8, caractérisé en ce que la cartouche filtrante (10) ou la cartouche filtrante constituée de deux cartouches individuelles (10', 10") sont maintenues par des taquets ou talons d'enclenchement élastique au collet de la plaque de base (2") ou à l'arbre de centrage (31) ou à la croix de centrage (32) lors du montage avant l'application par pression dans le siège.

10. Filtre de protection selon l'une des revendications 1 à 9, caractérisé en ce que le couvercle (6) est fixé par un verrouillage tournant du type à baïonnette sur le fond (2") du boîtier (1), les baïonnettes de verrouillage (7) étant réalisées comme éléments élastiques provoquant l'application par pression.

11. Filtre de protection selon l'une des revendications 1 à 10, caractérisé en ce que le côté interne du couvercle (6) est pourvu d'un organe élastique provoquant l'application par pression, tel qu'un coussin de pression, un ressort ou analogue.

12. Filtre de protection selon l'une des revendications 1 à 11, caractérisé en ce qu'il est prévu sur le côté interne du couvercle (6) fermant l'ouverture de remplacement (5) un collet (6') s'étendant tout autour dont le diamètre externe est légèrement inférieur au diamètre interne des anneaux de fermeture (16) des moitiés de cartouche (10', 10").

13. Filtre de protection selon l'une des revendications 1 à 12, caractérisé en ce que le couvercle (6) peut être remplacé par un récipient de réception (33), un sac d'entretien (35) ou analogue, dans lequel les taquets ou talons d'enclenchement maintenant la cartouche filtrante (10) ou les deux moitiés de cartouche (10', 10") constituant une cartouche filtrante peuvent être relâchés de préférence seulement après la mise en place du récipient de réception (33), du sac d'entretien (35) ou analogue.

14. Filtre de protection selon la revendication 13, caractérisé en ce que pour la mise en place du sac d'entretien (35) on peut monter un insert de remplacement (34) dans le verrouillage tournant au fond (2', 2") du boîtier (1), l'insert de remplacement (34) présentant au moins une rainure (34') pour le serrage du sac d'entretien (35) au moyen d'un anneau de serrage (34").

15. Filtre de protection selon l'une des revendications 1 à 14, caractérisé en ce que les deux moitiés de cartouche de la cartouche filtrante (10) sont constituées, respectivement, d'une cartouche individuelle (10', 10"), de préférence pourvue de couches différentes de filtres à sorption et/ou de filtres pour les matières suspendues en l'air (11, 12).

16. Filtre de protection selon l'une des revendications 1 à 15, caractérisé en ce qu'une couche filtrante pour les matières suspendues en l'air additionnelle est disposée au voisinage du cylindre interne avec au moins l'une des moitiés de cartouche ou cartouches individuelles (10', 10") de la cartouche filtrante (10).
